# FASCICULE DE BREVET EUROPEEN

(11) **EP 1 123 576 B1**
(45) Date de publication et mention de la délivrance du brevet: **25.09.2002**
(21) Numéro de dépôt: 99949081.6
(22) Date de dépôt: 20.10.1999
(51) Int. Cl.: H02K 1/27

(54) **MACHINE ELECTRIQUE TOURNANTE POSSEDANT UN NOUVEL AGENCEMENT D'EXCITATION ROTORIQUE PAR AIMANTS PERMANENTS**
DREHENDE ELEKTRISCHE MASCHINE MIT NEUER ANORDNUNG FÜR DAUERMAGNETERREGTER LÄUFER
ELECTRIC ROTARY MACHINE WITH NOVEL ROTOR EXCITATION ARRANGEMENT BY PERMANENT MAGNETS

(30) Priorité: 20.10.1998 FR 9813119
(43) Date de publication de la demande: 16.08.2001
(73) Titulaire: VALEO EQUIPEMENTS ELECTRIQUES MOTEUR, 94000 Créteil (FR)
(72) Inventeur: AKEMAKOU, Antoine, Dokou, F-94400 Vitry-sur-Seine (FR)
(74) Mandataire: Texier, Christian
(86) Numéro de dépôt international: FR9902550
(87) Numéro de publication internationale: WO00024110

(56) Documents cités:
- EP-A- 0 538 472
- WO-A-91/09443
- DE-A- 1 488 733
- DE-A- 2 062 486
- FR-A- 2 578 116
- GB-A- 2 289 991
- US-A- 4 504 755

## Description

La présente invention concerne d'une façon générale le domaine des machines tournantes, et plus particulièrement le domaine des moteurs ou générateurs à courant alternatif dont l'excitation rotorique est réalisée par aimants permanents.

De telles machines sont bien connues. Lorsque l'excitation est réalisée au niveau du rotor uniquement à l'aide d'aimants permanents, alors l'on peut très sensiblement simplifier la machine, en évitant notamment le recours à des bobinages de rotor et aux dispositions associées, à savoir balais, porte-balais, etc..

Il en résulte une machine plus économique et plus fiable.

En revanche, la nécessité de prévoir, dans les machines connues, un aimant par pôle du rotor pose des problèmes de poids et d'un coût de revient largement dépendant du coût des aimants.

En outre, l'impossibilité dans une telle machine de contrôler le degré d'excitation pose un certain nombre de problèmes, qui sont exposés en particulier dans le document « Analyse des possibilités de fonctionnement en régime de désexcitation des moteurs à aimants permanents », Multon et al., J. Phys. III France 5, 1995, les Editions de Physique 1995.

Plus précisément, en particulier dans le cas d'un alternateur de véhicule automobile, la large gamme de vitesses de rotation possibles, de même que la large gamme de puissances électriques demandées, implique que le rotor puisse délivrer des niveaux de flux utile très variables, c'est-à-dire puisse donner lieu en son sein à des phénomènes de défluxage relativement importants.

Par ailleurs, comme le montre en particulier le document précité, les machines à aimants permanents comportent typiquement un nombre d'aimants égal au nombre de pôles du rotor, ce qui les rend coûteux, lourds, et parfois délicats à concevoir, avec en particulier des possibilités de défluxage insuffisantes.

Ainsi, par exemple, une machine dont le rotor possède des aimants successifs de polarités alternées doit comporter pour le défluxage, entre chaque paire d'aimants adjacents, des pièces magnétiques intermédiaires destinées à véhiculer le flux de défluxage, et il en résulte un abaissement des performances nominales.

On connaît déjà des machines dont le rotor possède un nombre d'aimants permanent inférieur au nombre de pôles du rotor, et typiquement un nombre d'aimants permanents égal à la moitié du nombre de pôles.

Le document EP-A-0 538 472 décrit une machine tournante du genre mentionné ci-dessus.

Ces machines connues présentent toutefois des limitations en ce que les flux magnétiques entre les aimants et les pôles sont mal contrôlés, au détriment du rendement de la machine, et en ce qu'elles sont mal adaptées à des applications du type alternateurs ou alterno-démarreurs de véhicules automobiles qui imposent des possibilités de défluxage importantes.

La présente invention vise à pallier ces limitations de l'état de la technique, et à proposer une machine électrique à excitation permanente dont le rotor soit plus économique et plus simple à réaliser, et de poids réduit, tout en offrant des possibilités de défluxage qui soient bien compatibles notamment avec les applications de type alternateur ou alterno-démarreur, et qui en outre permette une bonne canalisation du flux entre les aimants et les pôles du rotor.

Ainsi la présente invention propose une machine électrique tournante, comprenant un stator possédant une pluralité d'encoches recevant des bobinages d'induit et un rotor comportant des moyens d'excitation constitués par des aimants permanents principaux reçus dans une structure rotorique pour définir une pluralité de pôles Nord et Sud successifs, les aimants permanents principaux étant prévus en un nombre égal à la moitié du nombre de pôles, caractérisée en ce que la structure rotorique comprend une pluralité de zones barrières sensiblement imperméables au flux magnétique qui sont disposées par rapport aux aimants principaux de manière à ce qu'une partie substantielle d'un flux magnétique entrant dans un aimant principal soit issu d'au moins un pôle Sud adjacent à l'aimant et qu'une partie substantielle d'un flux magnétique sortant d'un aimant soit dirigé vers au moins un pôle Nord adjacent à l'aimant.

Des aspects préférés, mais non limitatifs, de la machine selon l'invention sont les suivants :
- les aimants permanents principaux sont répartis essentiellement radialement dans le rotor et aptes à engendrer des flux magnétiques ayant tous le même sens en direction tangentielle, et les pôles du rotor sont délimités par une alternance de cavités recevant lesdits aimants principaux et d'autres cavités essentiellement radiales définissant lesdites zones barrières.
   * lesdites cavités débouchent sur la périphérie du rotor pour séparer les pôles les uns des autres.
   * lesdites cavités sont séparées deux à deux par une zone de la structure rotorique dont la section minimale est choisie de façon à minimiser les flux de fuite tout en autorisant un défluxage de la machine.
   * lesdites cavités sont séparées d'un orifice central pour un arbre de rotor par une zone de la structure rotorique dont la section minimale est choisie de façon à minimiser les flux de fuite tout en autorisant un défluxage de la machine.
   * les aimants permanents principaux sont répartis essentiellement tangentiellement dans le rotor et aptes à engendrer des flux magnétiques ayant tous le même sens en direction radiale, et les pôles du rotor sont définis d'une part au niveau desdits aimants principaux et d'autre part au niveau de zones intermédiaires de la structure rotorique séparant lesdits aimants principaux.
   * les aimants principaux sont situés en retrait de la surface périphérique de la structure rotorique.
   * les aimants principaux définissent, par leur surface radialement extérieure, une partie de la surface périphérique du rotor.
   * les pôles du rotor sont séparés par des encoches, et chaque aimant principal s'étend, en direction tangentielle, sensiblement entre deux encoches adjacentes.
   * la distance entre les fonds desdites encoches et l'aimant principal associé est choisie de façon à minimiser les flux de fuite tout en autorisant un défluxage de la machine.
   * la structure rotorique possède une pluralité de cavités qui s'étendent entre les aimants principaux et la région centrale du rotor et qui définissent lesdites zones barrières, de manière à canaliser le flux entre lesdites zones intermédiaires et les faces radialement intérieures desdits aimants principaux.
   * le rotor possède une alternance d'aimants principaux à flux tangentiel orientés radialement et d'aimants principaux à flux radial orientés tangentiellement.
   * lesdites cavités définissant lesdites zones barrières sont remplies d'un matériau choisi parmi l'air, les matières plastiques et les métaux amagnétiques.

Avantageusement, la machine telle que définie ci-dessus constitue un alternateur ou un alterno-démarreur de véhicule automobile.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
la figure 1 est une vue schématique partielle en coupe transversale d'une machine tournante selon une première forme de réalisation de l'invention,
la figure 2 est une vue schématique partielle en coupe transversale d'une machine tournante selon une deuxième forme de réalisation de l'invention,
la figure 3 est une vue schématique partielle en coupe transversale d'une machine tournante selon une troisième forme de réalisation de l'invention,
la figure 4 est une vue schématique d'un exemple concret d'un rotor d'une machine selon la première forme de réalisation,
les figures 5a et 5b sont des vues schématiques de deux exemples concrets de rotors de machines selon la deuxième forme de réalisation, et
la figure 6 est une vue schématique d'un exemple concret d'un rotor d'une machine selon la troisième forme de réalisation.

On observera à titre préliminaire que la description qui suit est donnée dans le cadre d'une machine tournante possédant douze pôles au rotor et douze pôles au stator. Naturellement, l'homme du métier saura faire les adaptations nécessaires pour réaliser des machines possédant des nombres de pôles différents.

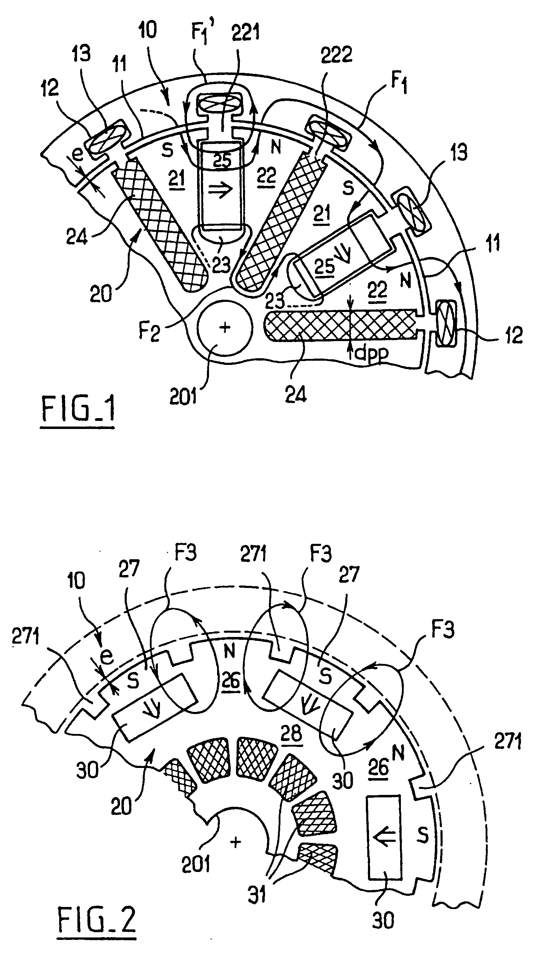

En référence tout d'abord à la figure 1, une machine tournante possède un stator 10 et un rotor 20. Le stator est un stator monophasé à douze pôles de type classique, avec des dents de stator 11 qui délimitent deux à deux des encoches 12 dans lesquelles sont bobinés des enroulements d'induit 13 monophasés. Un stator polyphasé est bien entendu également envisageable.

Le rotor 10 est un rotor à aimants permanents, dépourvu de bobinages, également doté de douze pôles. Sa structure rotorique est de préférence réalisée par empilage de tôles, de façon en soi bien connue. Les polarités alternées N et S de ces douze pôles sont réalisées à l'aide de six aimants permanents 25, qui ont ici orientés de façon à engendrer des flux ayant tous le même sens dans la direction circonférentielle du rotor (ici dans le sens des aiguilles d'une montre).

Plus précisément, dans la vue en coupe de la figure 1, chaque aimant 25 présente une section généralement rectangulaire dont le grand axe s'étend en direction radiale, et est emprisonné dans une cavité essentiellement complémentaire 23 formée dans la structure rotorique et délimitée par deux dents 21, 22 dont les surfaces extérieures définissent deux pôles adjacents du rotor. En outre, deux dents successives 22 et 21, c'est-à-dire une dent 22 délimitant une cavité 23 du côté horaire et une dent 21 délimitant la cavité suivante 23 du côté anti-horaire, délimitent également une cavité 24 formant une zone barrière destinée à faire obstacle dans une large mesure au passage d'un flux magnétique à travers elle dans la direction circonférentielle. A cet effet, les cavités 24 ont une largeur dpp qui est sensiblement supérieure à la taille de l'entrefer e entre le stator et le rotor, leur caractère magnétiquement imperméable étant désigné, sur cette figure et les deux suivantes, par des doubles hachures.

A la circonférence du rotor sont formées des encoches 221, 222 correspondant respectivement aux emplacements des aimants 25 et des cavités 24.

On comprend que, grâce à un tel agencement, le flux magnétique entre le rotor et le stator adopte principalement le trajet illustré par les flèches F1 et F1', le flux sortant d'un aimant 25 atteignant le pôle opposé de l'aimant suivant, dans le sens horaire, en passant par le stator autour d'un brin de bobinage d'induit 13, ou encore atteignant le pôle opposé du même aimant en passant autour du brin de bobinage d'induit adjacent. On définit ainsi à la surface du rotor 20 des pôles alternés nord et sud, avec douze pôles définis par six dents 21 alternées avec six dents 22, et ceci en utilisant seulement six aimants 25. Ainsi l'on peut réaliser le rotor de façon sensiblement plus économique pour un flux nominal donné, étant donné que le nombre d'aimants est égal à la moitié seulement du nombre de pôles. Si le flux recherché est important, on utilise avantageusement des aimants à base de terres rares.

On observera ici que le flux de fuite des aimants 25, susceptible de passer entre le fond des cavités 24 et l'orifice central 201 pour l'arbre de rotor (voir flèche F2), peut être diminué autant que possible en diminuant d'une part la distance minimale entre chaque cavité 23 d'aimant et la cavité libre 24 adjacente, et en diminuant d'autre part la distance minimale entre le fond de chaque cavité libre 24 et l'orifice central 201. Ces distances sont naturellement choisies pour ne pas compromettre la stabilité mécanique du rotor et ses performances électriques.

Dans le même temps, si la machine doit pouvoir donner lieu à un défluxage important, en particulier dans le cas d'un alternateur faiblement chargé, ces distances sont choisies de façon à autoriser un tel défluxage.

On notera ici que, l'objet des cavités 24 étant de faire obstacle au flux magnétique, elles peuvent être soit laissées vides (et donc remplies d'air), soit garnies d'un matériau amagnétique tel qu'une matière plastique, de l'aluminium, etc.

Maintenant en référence à la figure 2, on a représenté une deuxième forme de l'invention où les aimants engendrent non plus un flux en direction essentiellement tangentielle comme dans le cas de la figure 1, mais un flux essentiellement radial. Le stator 10 est essentiellement identique à celui de la figure 1 (en pouvant aussi être polyphasé), et ne sera pas décrit à nouveau.

Ainsi le rotor de la figure 2 comporte une série de douze pôles, correspondant à six zones 26 du la structure rotorique en alternance avec six zones 27 de cette même structure, ces pôles étant séparés par des encoches 271 formées en périphérie de la structure rotorique.

En retrait vers l'intérieur par rapport aux zones 27 sont prévus respectivement six aimants permanents 30 de forme généralement rectangulaire, dont le grand axe est orienté en direction tangentielle, ces aimants engendrant un flux magnétique dirigé radialement vers l'intérieur, comme illustré. Les zones 26 de la structure rotorique sont quant à elles dépourvues de tout aimant.

En outre, la structure rotorique comprend une série d'ouvertures 31 qui entourent l'orifice central 201 pour l'arbre de rotor en s'étendant de façon essentiellement continue entre cet orifice et les aimants 30, de façon à former des zones barrières faisant obstacle dans une large mesure à la circulation d'un flux magnétique en direction radiale à leur niveau. Ces ouvertures 31 délimitent avec les cavités (non référencées) recevant les aimants 30 des zones 28 de la structure rotorique.

Par ailleurs ces cavités 31, si elles sont laissées vides, contribuent à alléger le rotor. Si au contraire on souhaite augmenter l'inertie du rotor, on peut les remplir à l'aide d'un matériau amagnétique de densité choisie.

On comprend qu'avec un agencement, le flux magnétique émis par les aimants 30 ne peut se propager que de façon limitée vers le centre du rotor. Il en résulte que le flux magnétique engendré par chaque aimant 30 va se propager en boucle, selon les flèches F3 telles qu'illustrées, en passant par la zone 28 sous-jacente et par les zones 26 situées de part et d'autre, pour alors sortir du rotor et atteindre le stator 10 en passant autour de deux brins de bobinages d'induit, puis en rentrant à nouveau dans le stator au niveau de la zone 27.

Ainsi, dans ce cas également, on définit une succession de douze pôles alternés N et S, à l'aide de seulement six aimants 30.

On observera ici que cette seconde forme de réalisation autorise un défluxage important, qui est déterminé principalement par la distance qui sépare le fond de chaque encoche 271 de l'aimant adjacent et par la distance qui sépare chaque aimant de la surface d'entrefer adjacente.

On observera également que cet agencement des aimant au sein même de la structure rotorique permet de résister aisément aux forces centrifuges auxquelles les aimants sont exposés lors de la rotation du rotor. En variante, on peut naturellement prévoir de monter les aimants 30 de façon surfacique, en étant retenus alors par des griffes ou talons de la structure rotorique.

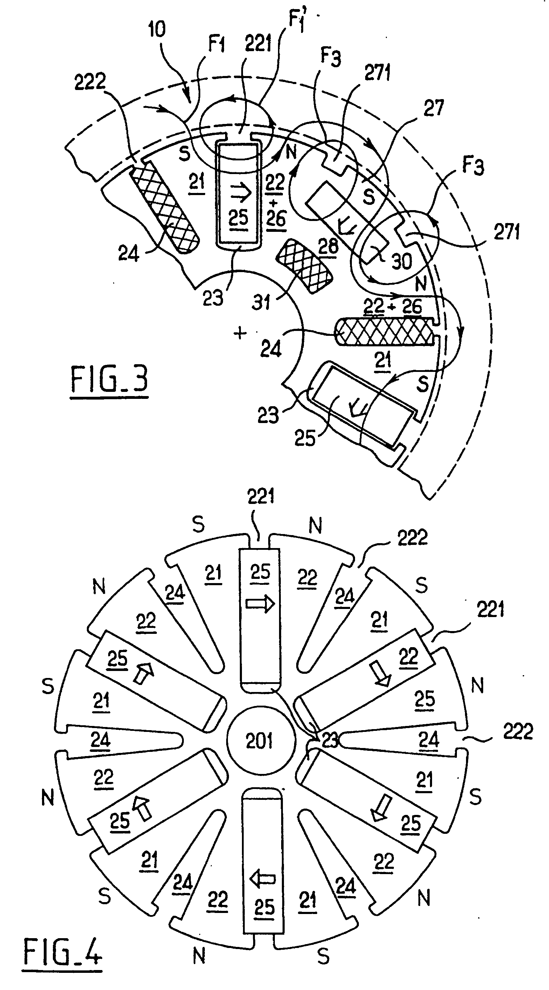

La figure 3 illustre une troisième forme de réalisation de l'invention, où l'on a combiné les agencements des première et deuxième forme de réalisation. Il s'agit ici encore d'un rotor à douze pôles, coopérant avec un stator 10 du type décrit plus haut (ou ici à nouveau polyphasé).

Le rotor possède trois aimants 25 à flux tangentiel selon la figure 1, et trois aimants 30 à flux radial selon la figure 2. A chaque aimant 25 est associée une cavité 24 formant une barrière pour le flux magnétique, cette cavité étant située du côté anti-horaire de l'aimant 25 et séparée de celui-ci par une dent 21. Par ailleurs, à chaque aimant 30 sont associées d'une part, du côté radialement extérieur, une zone 27 délimitée par deux encoches 271, et d'autre part, du côté radialement intérieur, une zone 28 délimitée intérieurement par une cavité 31. Ces cellules individuelles sont juxtaposées de telle manière qu'une dent 22 correspondant à un pôle N dans la première forme de réalisation se confonde avec une zone 26 correspondant également à un pôle N dans la deuxième forme de réalisation. On a à cet égard désigné ces zones de la structure rotorique par « 22 + 26 » sur la figure 3.

Dans cette troisième forme de réalisation, les comportements des première et seconde formes de réalisation se combinent, avec les trajets de flux F1, F1' et F3 tels qu'illustrés.

Dans ce cas, le défluxage peut s'opérer tant au niveau de la zone de la structure rotorique entourant l'orifice central 201 qu'au niveau des zones situées entre les encoches 271 et les aimants 30.

La figure 4 illustre une forme de réalisation concrète d'un rotor à douze pôles réalisé selon le principe illustré sur la figure 1. Les éléments et parties correspondantes y sont désignés par les mêmes signes de référence. On observe sur la figure 4 que, pour permettre de loger des aimants 25 de taille suffisamment grande, les cavités 24 se rétrécissent progressivement de l'extérieur vers l'intérieur.

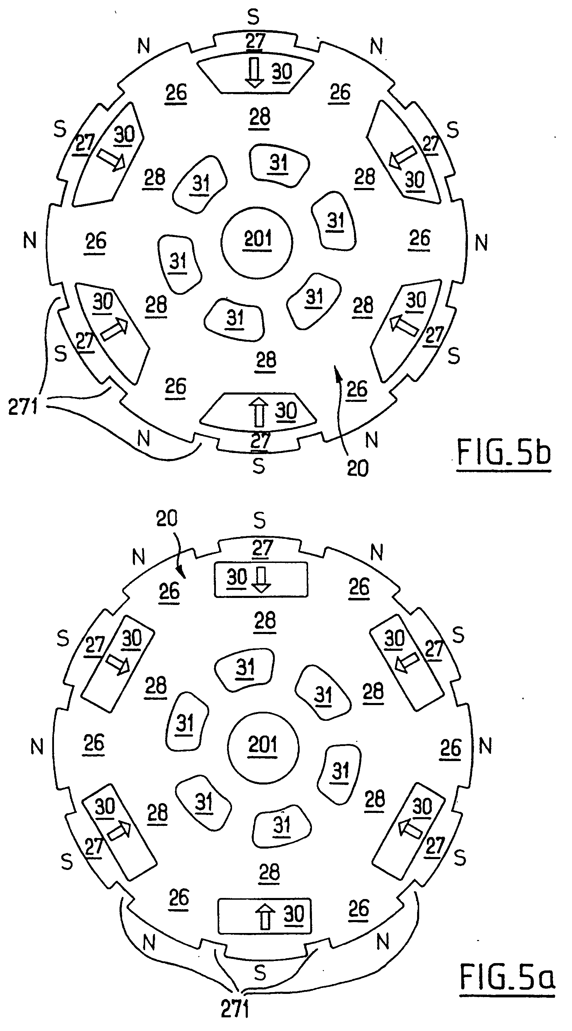

La figure 5a illustre une forme de réalisation concrète d'un rotor à douze pôles réalisé selon le principe de la figure 2. La figure 5b illustre quant à elle une variante de cette forme de réalisation, où les aimants 30 présentent une forme généralement trapézoïdale, avec une dimension en direction circonférentielle qui diminue lorsque l'on se déplace radialement de l'extérieur vers l'intérieur, pour ainsi conférer aux petits bords une inclinaison propice à la circulation du flux magnétique vers les pôles N adjacents.

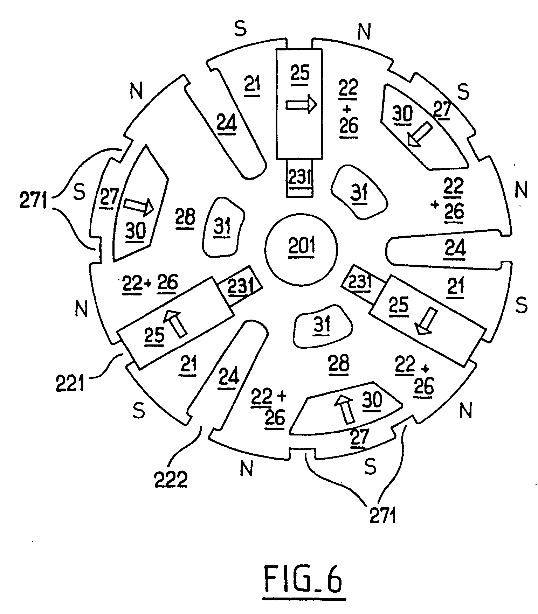

Enfin la figure 6 illustre une forme de réalisation concrète d'un rotor à douze pôles réalisé selon le principe mixte de la figure 3. On observe ici que, pour des raisons liées à la conception du rotor et à sa tenue mécanique, les cavités 23 qui reçoivent les aimants 25 à flux tangentiel sont complétées, vers l'intérieur en direction radiale, par des prolongements 231 qui permettent de réduire les flux de fuite entre le fond desdites cavités et l'orifice central 201 du rotor.

Comme on l'a indiqué plus haut, l'invention s'applique à tout moteur ou générateur à courant alternatif à excitation permanente, et en particulier aux alternateurs et alterno-démarreurs pour véhicules automobiles.

En particulier, pour mieux encore canaliser les flux magnétiques engendrés par les aimants permanents et donc améliorer la performance de la machine, on peut prévoir des aimants secondaires, plus petits, situés dans les régions du rotor - différentes des régions recevant les aimants principaux 25 ou 30 - où de tels flux de fuite sont susceptibles d'apparaître.

## Revendications

1. Machine électrique tournante, comprenant un stator (10) possédant une pluralité d'encoches (12) recevant des bobinages d'induit (13) et un rotor (20) comportant des moyens d'excitation constitués par des aimants permanents principaux (25, 30) reçus dans une structure rotorique pour définir une pluralité de pôles Nord et Sud (N, S) successifs, les aimants permanents principaux étant prévus en un nombre égal à la moitié du nombre de pôles, **caractérisée en ce que** la structure rotorique comprend une pluralité de zones barrières (24, 31) sensiblement imperméables au flux magnétique qui sont disposées par rapport aux aimants principaux de manière à ce qu'une partie substantielle d'un flux magnétique entrant dans un aimant principal soit issu d'au moins un pôle Sud adjacent à l'aimant et qu'une partie substantielle d'un flux magnétique sortant d'un aimant soit dirigé vers au moins un pôle Nord adjacent à l'aimant.

2. Machine selon la revendication 1, **caractérisée en ce que** les aimants permanents principaux (25) sont répartis essentiellement radialement dans le rotor et aptes à engendrer des flux magnétiques ayant tous le même sens en direction tangentielle, et **en ce que** les pôles du rotor sont délimités par une alternance de cavités (23) recevant lesdits aimants principaux et d'autres cavités essentiellement radiales (24) définissant lesdites zones barrières.

3. Machine selon la revendication 2, **caractérisée en ce que** lesdites cavités (23, 24) débouchent sur la périphérie du rotor pour séparer les pôles les uns des autres.

4. Machine selon l'une des revendications 2 et 3, **caractérisée en ce que** lesdites cavités (23, 24) sont séparées deux à deux par une zone (21, 22) de la structure rotorique dont la section minimale est choisie de façon à minimiser les flux de fuite tout en autorisant un défluxage de la machine.

5. Machine selon l'une des revendications 2 à 4, **caractérisée en ce que** lesdites cavités (23, 24) sont séparées d'un orifice central (201) pour un arbre de rotor par une zone de la structure rotorique dont la section minimale est choisie de façon à minimiser les flux de fuite tout en autorisant un défluxage de la machine.

6. Machine selon la revendication 1, **caractérisée en ce que** les aimants permanents principaux (30) sont répartis essentiellement tangentiellement dans le rotor et aptes à engendrer des flux magnétiques ayant tous le même sens en direction radiale, et **en ce que** les pôles du rotor sont définis d'une part au niveau (27) desdits aimants principaux et d'autre part au niveau de zones intermédiaires (26) de la structure rotorique séparant lesdits aimants principaux.

7. Machine selon la revendication 6, **caractérisée en ce que** les aimants principaux (30) sont situés en retrait de la surface périphérique de la structure rotorique.

8. Machine selon la revendication 6, **caractérisée en ce que** les aimants principaux définissent, par leur surface radialement extérieure, une partie de la surface périphérique du rotor.

9. Machine selon l'une des revendications 6 à 8, **caractérisée en ce que** les pôles du rotor sont séparés par des encoches (271), et **en ce que** chaque aimant principal (30) s'étend, en direction tangentielle, sensiblement entre deux encoches adjacentes.

10. Machine selon la revendication 9, **caractérisée en ce que** la distance entre les fonds desdites encoches (271) et l'aimant principal associé (30) est choisie de façon à minimiser les flux de fuite tout en autorisant un défluxage de la machine.

11. Machine selon l'une des revendications 6 à 10, **caractérisée en ce que** la structure rotorique possède une pluralité de cavités (31) qui s'étendent entre les aimants principaux (30) et la région centrale (201) du rotor et qui définissent lesdites zones barrières, de manière à canaliser le flux entre lesdites zones intermédiaires (26) et les faces radialement intérieures desdits aimants principaux.

12. Machine selon l'une des revendications 2 à 6 prises en combinaison avec l'une des revendications 7 à 11, **caractérisée en ce que** le rotor possède une alternance d'aimants principaux (25) à flux tangentiel orientés radialement et d'aimants principaux (30) à flux radial orientés tangentiellement.

13. Machine selon l'une des revendications 2 à 5 et 11, **caractérisée en ce que** lesdites cavités (24, 31) définissant lesdites zones barrières sont remplies d'un matériau choisi parmi l'air, les matières plastiques et les métaux amagnétiques.

14. Machine selon l'une des revendications précédentes, **caractérisée en ce qu'**elle constitue un alternateur ou un alterno-démarreur de véhicule automobile.

## Patentansprüche

1. Drehende elektrische Maschine mit einem Ständer (10), der eine Vielzahl von Aussparungen (12) aufweist, die Ankerwicklungen (13) aufnehmen, und einem Läufer (20), der Erregermittel umfaßt, die von Dauerhauptmagneten (25, 30) gebildet sind, die in einer Läuferstruktur aufgenommen werden, um eine Vielzahl von aufeinanderfolgenden Nord- und Südpolen (N, S) zu bilden, wobei die Dauerhauptmagneten in einer Zahl vorgesehen sind, die der Hälfte der Zahl der Pole entspricht,
**dadurch gekennzeichnet, daß** die Läuferstruktur eine Vielzahl von Sperrbereichen (24, 31) umfaßt, die für den magnetischen Fluß nahezu undurchdringlich sind und in bezug auf die Hauptmagneten so angeordnet sind, daß ein wesentlicher Teil eines in einen Hauptmagneten gelangenden magnetischen Flusses wenigstens von einem dem Magneten benachbarten Südpol stammt und daß ein wesentlicher Teil eines aus einem Magneten austretenden magnetischen Flusses wenigstens zu einem dem Magneten benachbarten Nordpol gelenkt wird.

2. Maschine nach Anspruch 1,
**dadurch gekennzeichnet, daß** die Dauerhauptmagneten (25) im wesentlichen radial im Läufer verteilt sind und magnetische Flüsse zu erzeugen vermögen, die alle tangential die gleiche Richtung haben, und daß die Pole des Läufers abwechselnd durch die die Hauptmagnete aufnehmenden Vertiefungen (23) und andere im wesentlichen radiale, die Sperrbereiche bildenden Vertiefungen (24) begrenzt sind.

3. Maschine nach Anspruch 2,
**dadurch gekennzeichnet, daß** die Vertiefungen (23, 24) in den Randbereich des Läufers münden, um die Pole voneinander zu trennen.

4. Maschine nach einem der Ansprüche 2 oder 3,
**dadurch gekennzeichnet, daß** die Vertiefungen (23, 24) durch je zwei Bereiche (21, 22) der Läuferstruktur getrennt sind, deren Mindestquerschnitt so gewählt ist, daß die Streuflüsse möglichst gering sind, eine Entregung der Maschine jedoch gestattet wird.

5. Maschine nach einem der Ansprüche 2 bis 4,
**dadurch gekennzeichnet, daß** die Vertiefungen (23, 24) durch einen Bereich der Läuferstruktur von einer mittigen Öffnung (201) für die Läuferwelle getrennt sind, dessen Mindestquerschnitt so gewählt ist, daß die Streuflüsse möglichst gering sind, eine Entregung der Maschine jedoch gestattet wird.

6. Maschine nach Anspruch 1,
**dadurch gekennzeichnet, daß** die Dauerhauptmagneten (30) im wesentlichen tangential im Läufer verteilt sind und magnetische Flüsse zu erzeugen vermögen, die alle radial die gleiche Richtung haben, und daß die Pole des Läufers einerseits in Höhe (27) der Hauptmagneten und andererseits in Höhe der die Hauptmagneten trennenden Zwischenbereiche (26) der Läuferstruktur gebildet sind.

7. Maschine nach Anspruch 6,
**dadurch gekennzeichnet, daß** die Hauptmagneten (30) von der Randfläche der Läuferstruktur nach hinten versetzt angeordnet sind.

8. Maschine nach Anspruch 6,
**dadurch gekennzeichnet, daß** die Hauptmagneten durch ihre radial außenliegende Fläche einen Teil der Randfläche des Läufers bilden.

9. Maschine nach einem der Ansprüche 6 bis 8,
**dadurch gekennzeichnet, daß** die Pole des Läufers durch Aussparungen (271) getrennt sind und daß sich jeder Hauptmagnet (30) im wesentlichen zwischen zwei benachbarten Aussparungen tangential erstreckt.

10. Maschine nach Anspruch 9,
**dadurch gekennzeichnet, daß** der Abstand zwischen den Böden der Aussparungen (271) und dem zugehörigen Hauptmagneten (30) so gewählt ist, das die Streuflüsse möglichst gering sind, eine Entregung der Maschine jedoch gestattet wird.

11. Maschine nach einem der Ansprüche 6 bis 10,
**dadurch gekennzeichnet, daß** die Läuferstruktur eine Vielzahl von Vertiefungen (31) besitzt, die sich zwischen den Hauptmagneten (30) und dem mittleren Bereich (201) des Läufers erstrecken und die Sperrbereiche bilden, um den Fluß zwischen den Zwischenbereichen (26) und den radial innenliegenden Flächen der Hauptmagnete zu kanalisieren.

12. Maschine nach einem der Ansprüche 2 bis 6 in Kombination mit einem der Ansprüche 7 bis 11,
**dadurch gekennzeichnet, daß** der Läufer abwechselnd radial ausgerichtete Hauptmagnete (25) mit tangentialem Fluß und tangential ausgerichtete Hauptmagnete (30) mit radialem Fluß besitzt.

13. Maschine nach einem der Ansprüche 2 bis 5 und 11,
**dadurch gekennzeichnet, daß** die die Sperrbereiche bildenden Vertiefungen (24, 31) mit einem Material gefüllt sind, das aus Luft, Kunststoffen und nichtmagnetischen Metallen bestehen kann.

14. Maschine nach einem der vorhergehenden Ansprüche,
**dadurch gekennzeichnet, daß** sie einen Generator oder einen Starter-Generator für Kraftfahrzeuge bildet.

## Claims

1. Rotary electrical machine, comprising a stator (10) having a plurality of notches (12) receiving armature windings (13) and a rotor (20) having excitation means consisting of main permanent magnets (25, 30) received in a rotor structure in order to define a plurality of successive north and south poles (N, S), the main permanent magnets being provided in number equal to one half of the number of poles, **characterised in that** the rotor structure comprises a plurality of barrier zones (24, 31) substantially impermeable to the magnetic flux, which are disposed with respect to the main magnets so that a substantial part of a magnetic flux entering a main magnet issues from at least one south pole adjacent to the magnet and so that a substantial part of a magnetic flux leaving a magnet is directed towards at least one north pole adjacent to the magnet.

2. Machine according to Claim 1, **characterised in that** the main permanent magnets (25) are distributed essentially radially in the rotor and are able to generate magnetic fluxes all having the same direction in the tangential direction, and **in that** the poles of the rotor are delimited by an alternation of cavities (23) receiving the said main magnets and other essential radial cavities (24) defining the said barrier zones.

3. Machine according to Claim 2, **characterised in that** the said cavities (23, 24) open out on the periphery of the rotor in order to separate the poles from each other.

4. Machine according to one of Claims 2 and 3, **characterised in that** the said cavities (23, 24) are separated in pairs by a zone (21, 22) of the rotor structure, the minimum cross-section of which is chosen so as to minimise the leakage fluxes whilst allowing a defluxing of the machine.

5. Machine according to one of Claims 2 to 4, **characterised in that** the said cavities (23, 24) are separated from a central orifice (201) for a rotor shaft by a zone of the rotor structure whose minimum cross-section is chosen so as to minimise the leakage fluxes whilst allowing defluxing of the machine.

6. Machine according to Claim 1, **characterised in that** the main permanent magnets (30) are distributed essentially tangentially in the rotor and are able to generate magnetic fluxes all having the same direction in a radial direction, and **in that** the poles of the rotor are defined on the one hand at the level (27) of the said main magnets and on the other hand at the level of the intermediate zones (26) of the rotor structure separating the said main magnets.

7. Machine according to Claim 6, **characterised in that** the main magnets (30) are situated so as to be recessed below the peripheral surface of the rotor structure.

8. Machine according to Claim 6, **characterised in that** the main magnets define, for their radially external surface, part of the peripheral surface of the rotor.

9. Machine according to one of Claims 6 to 8, **characterised in that** the poles of the rotor are separated by notches (271), and **in that** each main magnet (30) extends, in the tangential direction, substantially between two adjacent notches.

10. Machine according to Claim 9, **characterised in that** the distance between the bottoms of the said notches (271) and the associated main magnet (30) is chosen so as to minimise the leakage fluxes whilst allowing defluxing of the machine.

11. Machine according to one of Claims 6 to 10, **characterised in that** the rotor structure has a plurality of cavities (31) which extend between the main magnets (30) and the central region (201) of the rotor and which define the said barrier zones, so as to channel the flux between the said intermediate zones (26) and the radially internal faces of the said main magnets.

12. Machine according to one of Claims 2 to 6 taken in combination with one of Claims 7 to 11, **characterised in that** the rotor has an alternation of main magnets (25) with tangential flux oriented radially and main magnets (30) with radial flux oriented tangentially.

13. Machine according to one of Claims 2 to 5 and 11, **characterised in that** the said cavities (24, 31) defining the said barrier zones are filled with a material chosen from amongst air, plastics materials and non-magnetic metals.

14. Machine according to one of the preceding claims, **characterised in that** it constitutes an alternator or a starter alternator of a motor vehicle.
